# EUROPÄISCHE PATENTSCHRIFT

(11) **EP 3 318 321 B1**
(45) Veröffentlichungstag und Bekanntmachung des Hinweises auf die Patenterteilung: **03.07.2019**
(21) Anmeldenummer: 16020438.4
(22) Anmeldetag: 08.11.2016
(51) Int. Cl.: B01J 8/02, B01J 8/00, B01D 53/04, B01J 20/34

(54) **VERFAHREN ZUR HERSTELLUNG EINER ADSORPTIONSEINRICHTUNG**
METHOD FOR PRODUCING AN ABSORPTION DEVICE
PROCÉDÉ DE FABRICATION D'UN DISPOSITIF D'ADSORPTION

(43) Veröffentlichungstag der Anmeldung: 09.05.2018
(73) Patentinhaber: Linde Aktiengesellschaft, 80331 München (DE)
(72) Erfinder: Grahl, Matthias, 80639 München (DE); Voss, Christian, 82538 Geretsried (DE); Schneider, Helko, 82515 Wolfratshausen (DE); Keil, Philipp, 93051 Regensburg (DE)

(56) Entgegenhaltungen:
- EP-A2- 1 023 938
- US-A1- 2006 254 420
- US-A1- 2011 206 573

## Beschreibung

Die Erfindung betrifft ein Verfahren zur Herstellung einer Adsorptionseinrichtung, ein Umrüstverfahren für eine Adsorptionseinrichtung sowie eine nach dem Herstellungsverfahren hergestellte Adsorptionseinrichtung.

Bei verfahrenstechnischen Anlagen kommen häufig Vorrichtungen zur Vorreinigung mittels Adsorption, beispielsweise zur Trocknung von großen Fluidmengen, zum Einsatz, die sich durch einen großen Durchsatz auszeichnen. Beispielsweise werden in kryogenen Luftzerlegungsanlagen Wasser, CO₂ und weitere Spurenverunreinigungen in solchen Vorrichtungen von Rohluft abgetrennt, damit diese Verunreinigungen bei nachfolgenden Prozessschritten, insbesondere Verdichten und Abkühlen, nicht kondensieren und so zu Problemen führen.

Typischerweise werden hierzu beispielsweise Radialadsorber eingesetzt, da diese für große Durchflussmengen geeignet sind. Diese sind häufig zylinderförmig aufgebaut, wobei ein mit einer Schüttung eines Adsorbens gefüllter Hohlzylinder von innen nach außen oder von außen nach innen mit dem zu reinigenden Fluid durchströmt wird.

Die EP 0 402 783 A2 beschreibt einen solchen Radialadsorber, bei dem ein Reaktorgehäuse im Wesentlichen zylindersymmetrisch um eine vertikale Achse aufgebaut ist.

Das Adsorbens umfasst häufig regelmäßige Körper oder Partikel mit einer definierten Größe, beispielsweise Kügelchen mit einem Durchmesser von einigen Millimetern. Die einzelnen Partikel des Adsorbens werden durch Adsorption, was auch Beladen genannt wird, einer mechanischen Belastung unterworfen, da sie beispielsweise aufquellen und/oder durch die frei werdende Adsorptionswärme thermische Spannungen im Material auftreten. Beim Regenerieren der Partikel treten ebenfalls Belastungen auf, da die Partikel beispielsweise entquellen. In einem zyklischen Betrieb einer Adsorptionseinrichtung kann dies dazu führen, dass die Partikel zerbrechen. Die Bruchstücke der Partikel können beispielsweise durch die Öffnungen in dem inneren oder äußeren Korb ausgetragen werden.

Insgesamt kann sich damit die Adsorptionskapazität des Radialadsorbers verringern. Ferner kann es dazu führen, dass ein Bereich in dem Hohlzylinder ohne Adsorbens entsteht, durch welche das Fluid ungereinigt durch den Radialadsorber strömen kann. Dann muss die Schüttung wieder aufgefüllt werden, um die Trocknungseigenschaften des Radialadsorbers aufrecht zu erhalten. Dies kann häufige und ungeplante Stillstände einer verfahrenstechnischen Anlage zur Folge haben.

Vor diesem Hintergrund ist es eine Aufgabe der Erfindung, ein Verfahren zur Herstellung einer verbesserten Adsorptionseinrichtung bereitzustellen.

Diese Aufgabe wird durch das vorgeschlagene Verfahren zur Herstellung einer Adsorptionseinrichtung gelöst. Gemäß einem ersten Aspekt wird ein Verfahren zur Herstellung einer Adsorptionseinrichtung vorgeschlagen. Dabei wird ein Adsorberbett der Adsorptionseinrichtung mit einer Schüttung eines Adsorbens befüllt, welches aus einer Mehrzahl von Adsorbentien mit einem Testverfahren ausgewählt wird. Bei dem Testverfahren wird ein Partikel jedes Adsorbens mehrfach mit einem Sorbat beladen und wieder regeneriert. Dadurch wird das Partikel zu einem gealterten Partikel. Ferner wird eine Brucheigenschaft B des gealterten Partikels jedes Adsorbens ermittelt. Für die Schüttung wird ein Adsorbens aus der Mehrzahl der Adsorbentien in Abhängigkeit der ermittelten Brucheigenschaft B ausgewählt.

Ein solches Herstellungsverfahren weist insbesondere den Vorteil auf, dass das für die Schüttung verwendete Adsorbens eine bevorzugte Alterungsbeständigkeit aufweist. Das heißt insbesondere, dass das Adsorbens, welches mittels des Testverfahrens ausgewählt wird, im Vergleich zu den weiteren Adsorbentien eine verbesserte Resistenz gegenüber Alterungsprozessen aufweist, wobei gleichzeitig weitere Eigenschaften, wie beispielsweise eine Korngröße des Partikels und/oder eine Kapazität oder Aufnahmefähigkeit für das Sorbat erhalten bleiben. Alterungsprozesse umfassen insbesondere ein Brüchig werden, ein Spröde werden und/oder ein Zerbrechen der Partikel. Derartige Alterungsprozesse können beispielsweise durch Zustandsänderungen, insbesondere Temperaturänderungen und/oder Volumenvariationen bedingt sein. Volumenvariationen der Partikel können beispielsweise aufgrund von Quellungs- und Entquellungsprozessen, die beispielsweise durch die Aufnahme bzw. Abgabe eines Sorbats ausgelöst werden, auftreten. Eine mit diesem Verfahren hergestellte Adsorptionseinrichtung weist folglich den Vorteil auf, dass Wartungsintervalle für die Adsorptionseinrichtung verlängert sind, da die Schüttung weniger häufig ersetzt und/oder aufgefüllt werden muss. Dies hilft insbesondere, die Betriebskosten einer solchen Adsorptionseinrichtung zu senken. Außerdem kann ein negativer Einfluss, beispielsweise ein Beschädigen, von ausgetragenen Bruchstücken von Partikeln eines Adsorbens auf weitere verfahrenstechnische Vorrichtungen, die der Adsorptionseinrichtung nachgelagert sein können, reduziert werden. Auch kann ein Verlegen und/oder Zusetzen eines der Adsorptionseinrichtung nachgelagerter Staubabscheiders reduziert und/oder verhindert werden. Dies trägt zu einem zuverlässigen Betrieb einer verfahrenstechnischen Anlage bei.

Eine Adsorptionseinrichtung wird beispielsweise zum Reinigen eines Fluids, insbesondere von Gasen, verwendet. Beispielsweise werden in kryogenen Luftzerlegungsanlagen Adsorptionseinrichtungen verwendet, welche insbesondere zum Trocknen von angesaugter Frischluft eingesetzt werden. Auch in anderen verfahrenstechnischen Anlagen werden Adsorptionseinrichtungen eingesetzt. Solche Anlagen dienen beispielsweise der Gewinnung von Gasen, wie beispielsweise Erdgas, Wasserstoff, Synthesegase, Olefine wie Ethylen und/oder Propylen, Stickstoff, Sauerstoff, Helium, Argon, und/oder weitere Edelgase. Ferner werden in Anlagen zur Herstellung von hochreinen Fluiden Adsorptionseinrichtungen zum Entfernen von Verunreinigungen eingesetzt.

Weitere Anwendungsmöglichkeiten für eine derartige Adsorptionseinrichtung sind beispielsweise als thermischer Energiespeicher, als Speicher für das Sorbat, insbesondere wenn dieses ein leicht flüchtiges Sorbat wie beispielsweise ein Gas ist, und als Katalysatoreinrichtung für chemische Reaktionen. Bei der Anwendung der Adsorptionseinrichtung als eine durchströmte Katalysatoreinrichtung wird anstelle von dem Adsorbens von dem Katalysator oder dem Katalysator-Material gesprochen. Ein Katalysator-Material kann, wie ein Adsorbens, als eine Schüttung von Partikeln vorliegen. Durch das vorgeschlagene Verfahren lassen sich in deshalb auch bei Katalysatoreinrichtungen die beschriebenen vorteilhaften Wirkungen erzielen. Eine Adsorptionseinrichtung umfasst insbesondere ein Adsorberbett, welches ein Volumen darstellt, in welchem das Adsorbens angeordnet wird. Insbesondere weist ein solches Adsorberbett eine Einströmöffnung und eine Ausströmöffnung auf, durch welche das zu reinigende Fluid ein- bzw. ausströmen kann. Das Adsorberbett wird mit einer Schüttung des Adsorbens befüllt. Die Schüttung umfasst eine große Anzahl von Partikeln eines jeweiligen Adsorbens. Die Adsorptionseinrichtung kann auch als ein Reaktor bezeichnet werden.

Adsorbentien, auch Adsorptionsmittel genannt, sind beispielsweise kohlenstoffhaltige Adsorbentien, wie Aktivkohle, Aktivkoks oder Kohlenstoffmolekularsiebe, oxidische Adsorbentien, wie Aktivtonerden, Kieselgele, Silicagele, Alugele oder Zeolithe, sowie Polymeradsorbentien und metallorganische Netzwerkverbindungen. Adsorbentien weisen bevorzugt eine hohe Porosität auf, was ihnen zu einer großen inneren Oberfläche verhilft. Aufgrund dieser großen inneren Oberfläche können viele Teilchen, wie beispielsweise Verunreinigungen, in bzw. an ein Adsorbens sorbieren. Die Porosität kann beispielsweise als Oberfläche pro Massenmenge angegeben werden. Die Oberfläche kann beispielsweise mit der BET-Methode nach DIN 66 131 bestimmt werden. Unter Porosität wird beispielsweise eine Makroporosität, eine Mesoporosität und eine Mikroporosität verstanden. Die Einteilung erfolgt beispielsweise nach IUPAC (International Union of Pure and Applied Chemistry) nach dem Porendurchmesser. Dabei werden Poren mit einem Durchmesser von 0,1 - 2,0 nm als Mikroporen, Poren mit einem Durchmesser von 2,0 - 50 nm als Mesoporen und Poren mit einem Durchmesser von über 50 nm als Makroporen bezeichnet. Die Mikroporosität ergibt sich beispielsweise bei Zeolithen durch die zugrundeliegende Kristallstruktur. In den Mikroporen findet hauptsächlich die Adsorption statt. In Abhängigkeit einer Porenweite können nur Moleküle bis zu einer bestimmten Größe in die mikroporöse Struktur des Adsorbens eindringen. Die Meso- und Makroporen dienen überwiegend dem Transport des Sorbats zu den Mikroporen.

Unterschiedliche Adsorbentien weisen beispielsweise unterschiedliche Porenweiten auf. Die Makro- und Mesoporen können beispielsweise durch Quecksilberintrusion, wie in der DIN 66133 beschrieben, oder Stickstoffadsorption, wie in der DIN 66134 beschrieben, charakterisiert werden. Die Mikroporen können beispielsweise durch Adsorption eines Sorbats mit bekanntem Moleküldurchmesser charakterisiert werden.

In bevorzugten Ausführungsformen ist das Adsorbens ein Zeolith. Zeolithe werden auch als Molsieb bezeichnet, da sie mit einer relativ gut definierten Porenweite herstellbar sind. Zeolithe sind insbesondere als Aluminosilikate aufgebaut, deren Summenformel im vollständig trockenen Zustand beispielsweise Mₓ(AlO₂)ₓ(SiO₂)_{y} ist, wobei M ein Metall, insbesondere aus der Gruppe der Alkalimetalle und/oder Erdalkalimetalle ist. Technische Adsorbentien auf Zeolith-Basis werden beispielsweise mit Hilfe anorganischer Bindemittel formuliert. Beispielsweise können viele kleine Zeolith-Teilchen, insbesondere Zeolith-Kristallite, mit dem Bindemittel zu einem größeren Partikel mit einer geeigneten Form, beispielsweise eine Kugel oder ein Extrudat mit unterschiedlicher Länge und unterschiedlichen geometrischen Formen, wie beispielsweise zylinderförmig, sternförmig und/oder in der Form eines regelmäßigen und/oder unregelmäßigen Polygons, zusammengefügt werden. Dies ermöglicht es, dass die Partikel eines Adsorbens im Wesentlichen gleichförmig sind. Man kann auch von Formkörpern sprechen. Dabei kommen verschiedene Bindemittel in Betracht, wie beispielsweise Sepiolith, Kaolinit, Attapulgit, oder Montmorillonit. Die Auswahl eines Bindemittels kann in Abhängigkeit der Kosten, der Prozessierbarkeit und insbesondere der Eigenschaften der fertigen Partikel erfolgen. Das Bindemittel hat insbesondere einen großen Einfluss auf die Brucheigenschaft der Partikel.

Ferner können auch bindemittelfreie Adsorbentien formuliert werden, wobei bei diesen beispielsweise in einem ersten Schritt ein Formkörper aus einer Mischung von Adsorbens-Teilchen mit Bindemittel-Teilchen eines temporären Bindemittels, wie beispielsweise Metakaolin, geformt wird. In einem zweiten Schritt wird das Bindemittel dann zu Adsorbens umgewandelt, beispielsweise durch Erhitzen des Formkörpers.

Eine Zusammenwirkung von verschiedenen Faktoren, die die Brucheigenschaft beeinflussen, ist komplex. Zudem sind die Vorgänge und/oder Mechanismen, die zu einem Altern der Partikel durch das Beladen und Regenerieren führen, nicht vollständig aufgeklärt. Deshalb ist eine Optimierung von Adsorbentien mit Blick auf spezifische Anforderungen kaum möglich. Durch das vorgeschlagene Verfahren wird diese Schwierigkeit umgangen, da es auch ohne Kenntnis von individuellen Wirkzusammenhängen und/oder Substanzeigenschaften z.B. des Bindemittels erlaubt, die Brucheigenschaft und die Alterungseigenschaften von Partikeln eines Adsorbens zu ermitteln.

In Abhängigkeit einer Anwendung und deren Anforderungen können verschiedene Adsorbentien in Betracht kommen, während andere für die Anwendung ungeeignet sein können. Parameter, mit denen eine zusätzliche, optionale Vorauswahl stattfinden kann, sind beispielsweise adsorptive Eigenschaften, Partikelgröße, Partikelgrößenverteilung, Umwelteigenschaften, chemische Eigenschaften und/oder weitere physikalische Eigenschaften. Mit dem vorgeschlagenen Verfahren wird aus einer beispielsweise anhand von adsorptiven Eigenschaften getroffenen Vorauswahl, dasjenige Adsorbens herausgefiltert, welches aufgrund seiner Brucheigenschaft für die jeweilige Anwendung besonders geeignet ist.

Ein Adsorbens wird bevorzugt in Form von gleichförmigen Partikeln, wie beispielsweise kleinen Kügelchen, bereitgestellt. Diese Bereitstellungsform bedingt eine einfache Handhabbarkeit und große Flexibilität in der Anordnung des Adsorbens bzw. einer Schüttung des Adsorbens.

Das Testverfahren umfasst das Beladen und Regenerieren eines Partikels eines jeden Adsorbens der Mehrzahl von Adsorbentien unter geeigneten Bedingungen, insbesondere gleichen oder ähnlichen Bedingungen, wie sie in der Adsorptionseinrichtung im Betrieb, beispielsweise als Bestandteil einer verfahrenstechnischen Anlage, auftreten. Beladen bedeutet hierbei insbesondere, dass das Adsorbens mit einem Sorbat, wie beispielsweise Wasser, beladen wird. Nach dem Beladen ist das Partikel mit dem Sorbat teilweise oder vollständig gesättigt. Anschließend muss das Partikel regeneriert werden, um erneut beladen werden zu können. Das Regenerieren des Partikels umfasst insbesondere ein teilweises oder vollständiges Entfernen des Sorbats von dem Partikel. Das Beladen und Regenerieren der Partikel kann beispielsweise zu inneren Spannungen in den Partikeln führen. Diese mechanischen Kräfte führen zu einer Alterung der Partikel. Beispielsweise können sich Mikrorisse ausbilden, die eine Integrität der Partikel beeinträchtigen. Somit sind die Partikel nach dem Testverfahren gealterte Partikel. Aufgrund einer solchen Alterung können sich insbesondere die mechanischen Eigenschaften, wie beispielsweise eine Brucheigenschaft, der Partikel verändern. Eine Brucheigenschaft umfasst insbesondere eine Kraft, welche auf ein solches Partikel ausgeübt werden kann, bis das Partikel zerbricht.

Aufgrund einer Heterogenität von einzelnen Partikel eines Adsorbens, beispielsweise bezüglich eines Partikeldurchmessers, einer Mikrozusammensetzung und/oder weiteren mikroskopischen Unterschieden wird das Testverfahren bevorzugt nicht mit genau einem Partikel eines jeden Adsorbens durchgeführt, sondern mit einer Mehrzahl von Partikeln eines jeden Adsorbens. Dies ermöglicht es, aus einer Mehrzahl von Testergebnissen einen Mittelwert zu ermitteln, welcher eine verlässlichere Aussage beispielsweise über eine mittlere Brucheigenschaft eines Adsorbens zulässt. Der Mittelwert kann dabei ein beliebiges statisches Mittel sein, wie beispielsweise das arithmetische Mittel, das geometrische Mittel, das harmonische Mittel, ein gewichteter Mittelwert usw.

Das Testverfahren bildet insbesondere eine Belastung der Partikel in einem tatsächlichen Anlagenbetrieb nach. Um in einer möglichst kurzen Zeit eine Anzahl verschiedener Adsorbentien zu testen und zu einem aussagekräftigen Ergebnis zu gelangen, werden in dem Testverfahren Parameterwerte so gewählt, dass eine beschleunigte Alterung der Partikel auftritt. Indem die Partikel in dem Testverfahren beispielsweise einer höheren Temperatur und/oder schnelleren Abfolge von Beladungs- und Regenerationsvorgängen mit einem Sorbat ausgesetzt werden, als dies im realen Anlagenbetrieb der Fall ist, wird eine im Vergleich beschleunigte Alterung erzielt.

Gemäß einer Ausführungsform des Verfahrens umfasst dieses die Schritte: Bereitstellen der Mehrzahl an Adsorbentien, wobei jedes Adsorbens eine Menge von Partikeln umfasst; Ermitteln einer Druckfestigkeit ϕ0 des Partikels. Die Druckfestigkeit entspricht der auf das Partikel ausgeübten Druckkraft, bei der das Partikel zerbricht. Durchführen des Testverfahrens, wobei bei dem Testverfahren mit einem Partikel jedes Adsorbens eine vorgegebene Anzahl N1 Testzyklen durchgeführt wird, wobei ein Testzyklus ein Beladen des Partikels mit einem Sorbat mit Hilfe eines mit dem Sorbat beladenen Fluids bei einer ersten Temperatur und anschließend ein Regenerieren des beladenen Partikels mit Hilfe eines weiteren Fluids bei einer zweiten Temperatur umfasst. Hierdurch werden gealterte Partikel erzeugt. Ermitteln der Druckfestigkeit ϕN1 des gealterten Partikels eines jeden Adsorbens; Auswählen des Adsorbens, bei dem die Druckfestigkeit ϕN1 gegenüber der Druckfestigkeit ϕ0 am wenigstens abgenommen hat, wobei die ermittelte Brucheigenschaft B dem Verhältnis der Druckfestigkeit ϕN1 zu der Druckfestigkeit ϕ0 entspricht; und Befüllen des Adsorberbetts der Adsorptionseinrichtung mit einer Schüttung des ausgewählten Adsorbens.

In Ausführungsformen umfasst das Ermitteln der Druckfestigkeit eines Partikels ein Beaufschlagen des Partikels mit einer von außen einwirkenden Druckkraft durch zwei Flächen, zwischen denen das Partikel angeordnet ist.

Das Bereitstellen einer Mehrzahl von Adsorbentien umfasst beispielsweise ein Bestellen unterschiedlicher Adsorbentien bei einem Hersteller. Bevorzugt wird von jedem Adsorbens der Mehrzahl die Druckfestigkeit im Auslieferungszustand und/oder nach einer festgelegten Vorbehandlung bestimmt. Die Bestimmung der Druckfestigkeit eines einzelnen Partikels kann beispielsweise gemäß der DIN 8948, Abschnitt 7.3, oder auch gemäß der ASTM D4179 erfolgen. Alternativ kann die Druckfestigkeit eines Ensembles von Partikeln bestimmt werden. Eine mögliche Methode hierfür ist beispielsweise in der ASTM D7084-04 beschrieben. Die derart bestimmte Druckfestigkeit entspricht dann einer statistisch gemittelten Druckfestigkeit von Einzelmessungen. Insbesondere werden bei der Bestimmung der Druckfestigkeit für jedes Adsorbens die gleichen Bedingungen verwendet, da ansonsten die Ergebnisse von unterschiedlichen Adsorbentien nicht vergleichbar sind. Beispielsweise werden alle Adsorbentien einer Vorbehandlung, insbesondere einer Trocknung, unterzogen. Die Druckfestigkeit kann beispielsweise für ein einzelnes Partikel bestimmt werden, indem dieses mit einer von außen einwirkenden Druckkraft beaufschlagt wird, beispielsweise mittels zweier paralleler Platten. Es können aber auch anders geformte Druckkörper verwendet werden.

Das Testverfahren umfasst insbesondere Testzyklen. Ein einzelner Testzyklus umfasst zumindest ein teilweises oder vollständiges Beladen eines Partikels mit einem Sorbat und ein Regenerieren des beladenen Partikels. Zum Beladen des Partikels mit dem Sorbat wird dieses einem mit dem Sorbat beladenen Fluid ausgesetzt. Dies erfolgt insbesondere bei einer ersten Temperatur. Dabei sorbiert das Sorbat von dem Fluid in bzw. auf das Partikel. Das heißt, die freie Oberfläche des Partikels wird mit Molekülen des Sorbats besetzt. Zum Regenerieren des beladenen Partikels wird das beladene Partikel einem weiteren Fluid, welches unterschiedlich zu dem Fluid ist, ausgesetzt. Dies erfolgt insbesondere einer zweiten Temperatur. Das weitere Fluid ist beispielsweise das reine Fluid, ein Regenerationsfluid, ein anderes Sorbat-freies Fluid und/oder ein anderes mit einem anderen Sorbat beladenen Fluid. Das weitere Fluid kann auch das mit dem Sorbat beladene Fluid bei einer anderen Temperatur sein. Das weitere Fluid weist eine Aufnahmekapazität bezüglich des Sorbats auf. Das heißt, dass das Sorbat von bzw. aus dem Partikel in das Fluid sorbieren kann. Damit wird die mit Molekülen des Sorbats besetzte Oberfläche des Partikels wieder frei von dem Sorbat. Anschließend ist das Partikel erneut mit dem Sorbat beladbar. In Abhängigkeit des Adsorbens sowie des Sorbats werden die erste und die zweite Temperatur gewählt. Beispielsweise steigt für Luft eine Kapazität für Feuchte mit steigender Temperatur. Dann ist es sinnvoll, die erste Temperatur (Beladen) geringer als die zweite Temperatur (Regenerieren) zu wählen. Bevorzugt wird eine vorgegebene Anzahl N1 dieser Testzyklen mit zumindest einem Partikel eines jeden Adsorbens durchgeführt. Die vorgegebene Anzahl umfasst beispielsweise 50 Testzyklen. Insbesondere wird jedes Adsorbens, das dem Testverfahren unterzogen wird, der gleichen Anzahl an Testzyklen unterzogen. Mit jedem Testzyklus altern die Partikel in dem oben genannten Sinne. Der Grad der Alterung hängt daher von der Anzahl an Testzyklen ab, die ein Partikel durchlaufen hat.

Im Anschluss an das Durchlaufen der vorgegebenen Anzahl N1 an Testzyklen wird die Druckfestigkeit ϕN1 des gealterten Partikels eines jeden Adsorbens ermittelt. Die Druckfestigkeit ϕN1 wird dabei wie bereits oben in Bezug auf die Druckfestigkeit ϕ0 beschrieben ermittelt. Um die Brucheigenschaft B zu ermitteln, wird die ermittelte Druckfestigkeit ϕN1 in das Verhältnis zu der Druckfestigkeit ϕ0 gesetzt. Wenn die Druckfestigkeit mit zunehmender Alterung abnimmt, liegt ein Zahlenwert dieses Verhältnisses im Bereich von 0 und 1. Je größer dieses Verhältnis ist, umso weniger ist das Partikel gealtert. Die ermittelte Brucheigenschaft B lässt somit einen Rückschluss auf die Alterungseigenschaften des Adsorbens zu. Für eine spezifische Anwendung kann auch ein Grenzwert oder ein Schwellwert vorgegeben werden, welcher von der Brucheigenschaft B nicht unterschritten werden soll. Beispielsweise kann gefordert werden, dass ein Adsorbens, wenn es in Betracht kommen soll, nach dem Durchlaufen von 50 Testzyklen eine Brucheigenschaft B von größer als 0,7 aufweisen muss. So können zum Beispiel aus einer Menge von zehn unterschiedlichen Adsorbentien diejenigen herausgefiltert werden, welche diese Bedingung erfüllen. In nachgelagerten weiteren Test können die verbliebenen Adsorbentien auf weitere Eigenschaften hin getestet werden, um so zu einem idealen Adsorbens für eine bestimmte Anwendung zu gelangen.

Gemäß einer weiteren Ausführungsform des Verfahrens umfasst dieses die Schritte: Durchführen des Testverfahrens, wobei bei dem Testverfahren mit einem Partikel jedes Adsorbens eine vorgegebene Anzahl N1 Testzyklen durchgeführt wird, wobei ein gealtertes Partikel erzeugt wird; Ermitteln der Druckfestigkeit ϕN1 des gealterten Partikels; Ermitteln einer maximalen Schnittfläche A des gealterten Partikels; Ermitteln einer spezifischen Druckfestigkeit φ, wobei φ = ϕN1/A ist. Die ermittelte Brucheigenschaft B entspricht der ermittelten spezifischen Druckfestigkeit φ. Zuletzt werden die Adsorbentien ausgewählt, deren spezifische Druckfestigkeit φ über einem vorgegebenen Schwellwert β liegt, φ ≥ β.

Die maximale Schnittfläche A eines gealterten Partikels entspricht der maximalen ebenen Schnittfläche, die durch das Partikel gelegt werden kann. Beispielsweise bei kugelförmigen Partikeln entspricht diese dem Flächeninhalt eines Kreises mit dem Radius der kugelförmigen Partikel. Die ermittelte spezifische Druckfestigkeit φ hat die Einheit N/m² oder auch N/mm². Die spezifische Druckfestigkeit φ hilft daher insbesondere dabei, Partikel von unterschiedlicher Größe miteinander zu vergleichen.

Beispielsweise kann ein Schwellwert β von 2 N/mm², bevorzugt von 2,5 N/mm² festgelegt werden. Damit lassen sich aus einer Mehrzahl von Adsorbentien diejenigen herausfiltern, welche dieses Kriterium nicht erfüllen, welche dann nicht weiter betrachtet werden brauchen. In weiteren, nachgelagerten Tests kann dann eine weitere Auswahl aus den verbleibenden Adsorbentien getroffen werden.

Gemäß einer weiteren Ausführungsform des Verfahrens umfasst dieses die Schritte: Durchführen des Testverfahrens, wobei bei dem Testverfahren mit einem Partikel jedes Adsorbens eine vorgegebene Anzahl N1 Testzyklen durchgeführt wird, zum Erzeugen des gealterten Partikels; Ermitteln der Druckfestigkeit ϕN1 des gealterten Partikels eines jeden Adsorbens; Durchführen von einer vorgegebenen Anzahl N2 Testzyklen mit einem Partikel eines jeden Adsorbens, wobei N2 größer N1 ist, zum Erzeugen eines stark gealterten Partikels. Ermitteln der Druckfestigkeit ϕN2 des stark gealterten Partikels eines jeden Adsorbens; und Auswählen des Adsorbens, bei dem die Druckfestigkeit ϕN2 gegenüber der Druckfestigkeit ϕN1 am wenigsten abgenommen hat. Die ermittelte Brucheigenschaft B entspricht hierbei dem Verhältnis der Druckfestigkeit ϕN2 zu der Druckfestigkeit ϕN1.

Mit einem solchen Verfahren ist es vorteilhafterweise möglich, eine Langzeitstabilität eines Adsorbens zu testen. Hierfür wird die Anzahl N2 beispielsweise als ein 10-faches, 20-faches, 50-faches oder auch 100-faches der Anzahl N1 gewählt.

Beispielsweise wird N1=50 und N2=1000 gewählt.

Gemäß einer weiteren Ausführungsform des Verfahrens ist die erste Temperatur geringer als die zweite Temperatur.

Die erste Temperatur entspricht der Temperatur beim Beladen, und die zweite Temperatur entspricht der Temperatur beim Regenerieren der Partikel. Beispielsweise kann Luft bei mit steigender Temperatur eine zunehmende Menge Wasser in Form von Feuchte aufnehmen. Daher ist es bei einer Adsorptionseinrichtung, die zur Trocknung von Luft eingesetzt wird, vorteilhaft, die Luft zum Trocknen mit einer geringen Temperatur, beispielsweise zwischen 0°C - 20°C durch das Adsorbens zu leiten. Um die Adsorptionseinrichtung zu regenerieren, wird im Vergleich hierzu Luft mit einer erhöhten Temperatur, beispielsweise zwischen 200°C - 300°C, durch das Adsorbens geleitet.

Gemäß einer weiteren Ausführungsform des Verfahrens liegt die erste Temperatur zwischen 0°C und 100°C, bevorzugt zwischen 5°C, und 50°C, weiter bevorzugt zwischen 15°C und 30°C. Ferner liegt die zweite Temperatur zwischen 100°C und 300°C, bevorzugt zwischen 150°C und 300°C, und weiter bevorzugt zwischen 200°C und 250°C.

Die bevorzugten Temperaturen und/oder Temperaturintervalle hängen von der Anwendung ab. Insbesondere bei kryogenen Anwendungen können andere Temperaturintervalle, beispielsweise unter 0°C, bevorzugt sein.

Mit einem solchen Verfahren kann sichergestellt werden, dass die Partikel in dem Testverfahren so stark belastet werden, dass eine beschleunigte Alterung eintritt und somit verlässliche Aussagen über das Verhalten der Partikel in einem realen Anlagenbetrieb ermöglicht werden.

Gemäß einer weiteren Ausführungsform des Verfahrens ist das Fluid Luft und das Sorbat ist Wasser.

Gemäß einer weiteren Ausführungsform des Verfahrens sind die Partikel der Adsorbentien von kugelförmiger Gestalt und weisen einen mittleren Radius von 0,1 mm bis 25 mm auf, bevorzugt 0,5 mm bis 10 mm und weiter bevorzugt 1 mm bis 5 mm. Andere Formen sind ebenfalls möglich. Beispielsweise zylinderförmig und/oder in Form regelmäßiger Polyeder wie beispielsweise würfelförmig.

Gemäß einer weiteren Ausführungsform des Verfahrens sind die Adsorbentien 13X-Zeolith-Molsiebmaterialien, welche eine Porenweite von 10 ±2 Ä aufweisen. 13X-Molsiebmaterialien sind insbesondere Zeolithe. Die Porenweite eines Zeoliths bzw. eines Molsiebmaterials ergibt sich aus der dem Material zugrundeliegenden Kristallstruktur, welche wiederum von der molekularen Zusammensetzung abhängig ist. Die Kristallstruktur kann mittels strukturaufklärenden Messverfahren bestimmt werden, wie beispielsweise mit Röntgenstreumethoden. Moleküle, die größer sind als die angegebene Porenweite, können nicht in einen solchen Kristall eindringen und daher nur zu sehr geringen Mengen adsorbiert werden.

Gemäß einer weiteren Ausführungsform des Verfahrens ist das Verfahren ein Umrüstverfarhen.

Ein solches Umrüstverfahren ist besonders vorteilhaft, wenn bei einer bereits bestehenden Anlage festgestellt wird, dass das verwendete Adsorbens nicht optimal ist. Dann kann beispielsweise gemäß dem vorgeschlagenen Verfahren ein optimales Adsorbens aus einer Mehrzahl von Adsorbentien ausgewählt werden.

Das Umrüstverfahren umfasst insbesondere die zu dem Herstellungsverfahren genannten Verfahrensschritte wie ein Bereitstellen einer Mehrzahl von Adsorbentien, ein Ermitteln der Druckfestigkeit, ein Durchführen des Testverfahrens und ein Auswählen des Adsorbens in Abhängigkeit einer ermittelten Brucheigenschaft. Insbesondere stellen die Ausführungsformen des Herstellungsverfahrens auch Ausführungsformen des Umrüstverfahrens dar.

Gemäß einem zweiten Aspekt (nicht Teil der Erfindung) wird eine Adsorptionseinrichtung zum Reinigen von mit einem Sorbat beladenen Fluid vorgeschlagen. Die Adsorptionseinrichtung umfasst ein mit einer Schüttung eines Adsorbens befülltes Adsorberbett. Die Adsorptionseinrichtung ist insbesondere nach einem Herstellungsverfahren gemäß dem ersten Aspekt hergestellt.

Die Adsorptionseinrichtung umfasst damit insbesondere eine Schüttung eines Adsorbens, welches mittels des Testverfahrens gemäß dem ersten Aspekt oder einer der Ausführungsformen des ersten Aspekts ausgewählt wurde. Gemäß einer Ausführungsform der Adsorptionseinrichtung ist diese als ein Radialadsorber ausgebildet. Der Radialadsorber weist einen inneren Korb und einen äußeren Korb auf. Der innere Korb und der äußere Korb sind jeweils mit Durchströmöffnungen zum Durchströmen mit dem Fluid versehen. Das Adsorbens ist in einem Zwischenraum zwischen dem inneren Korb und dem äußeren Korb angeordnet.

Radialadsorber sind insbesondere für große Durchströmmengen geeignet. Der innere Korb und der äußere Korb sind beispielsweise aus einem Metall gefertigt. Der innere Korb und der äußere Korb stellen den Zwischenraum bereit, welcher die Schüttung des Adsorbens aufnimmt. Der innere Korb und der äußere Korb dienen damit insbesondere zum Rückhalten der Schüttung des Adsorbens.

In einem Betrieb des Radialadsorbers wird die Schüttung von dem zu reinigenden Fluid und/oder von dem Regenerationsfluid durchströmt.

Gemäß einer weiteren Ausführungsform der Adsorptionseinrichtung sind die Durchströmöffnungen kleiner als die Partikel des Adsorbens ausgebildet.

Diese Ausführungsform hat den Vorteil, dass die Partikel nicht aus dem Zwischenraum zwischen dem inneren Korb und dem äußeren Korb durch die Durchströmöffnungen heraustreten können.

Gemäß einer weiteren Ausführungsform sind zumindest einige der Durchströmöffnungen größer als die Partikel ausgebildet, wobei die größeren Durchströmöffnungen ein Mittel zum Rückhalten der Partikel aufweisen.

Das Mittel zum Rückhalten der Partikel kann beispielsweise ein Drahtnetz, ein Stoffnetz aus synthetischem und/oder natürlichem Material und/oder ein Filtermaterial umfassen.

Gemäß einer weiteren Ausführungsform der Adsorptionseinrichtung ist der Radialadsorber als ein Zweischicht-Radialadsorber aufgebaut. Dieser weist ein zweites Adsorberbett auf, welches in einem Einströmbereich der Adsorptionseinrichtung angeordnet ist und mit einer Schüttung eines zweiten Adsorbens befüllt ist.

Zweischicht-Adsorber sind insbesondere dazu geeignet, in einer einzelnen Adsorptionseinrichtung zweistufig verschiedene Sorbate aus einem Fluid zu entfernen. Im Falle von einem Zweischicht-Radialadsorber sind die zwei Schüttungen beispielsweise radial ineinander angeordnet. Hierfür weist der Zweischicht-Radialadsorber beispielsweise zwischen dem äußeren Korb und dem inneren Korb einen mittleren Korb auf, welcher ebenfalls mit Durchströmöffnungen versehen ist. Der mittlere Korb kann auch weggelassen werden. Dann kann die Schüttung der beiden Adsorbentien in geeigneter Weise eingebracht werden, so dass sich die zwei Schichten ausbilden.

Ein Einströmbereich der Adsorptionseinrichtung bezeichnet insbesondere das Volumen der Adsorptionseinrichtung, in dem das Fluid zuerst in ein Adsorptionsbett eintritt. Bei einem Zweischicht-Radialadsorber wäre das beispielsweise das äußere der zwei ringförmigen Volumina, die zur Aufnahme einer Schüttung vorgesehen sind, wenn die Strömungsrichtung im Betrieb von außen nach innen ist. Alternativ kann es auch das innere ringförmige Volumen sein, wenn die Strömungsrichtung von innen nach außen ist.

Gemäß einer weiteren Ausführungsform der Adsorptionseinrichtung ist diese zum zyklischen Betrieb eingerichtet. Ein einzelner Betriebszyklus umfasst zumindest einen Reinigungsmodus zur Bereitstellung von gereinigtem Fluid sowie einen Regenerationsmodus zur Regeneration der Adsorptionseinrichtung. In dem Reinigungsmodus durchströmt das mit dem Sorbat beladene Fluid die Adsorptionseinrichtung, wobei das Sorbat von dem Fluid auf das Adsorbens sorbiert. Bei dem Regenerationsmodus durchströmt ein Regenerationsfluid die Adsorptionseinrichtung, wobei das Sorbat von dem beladenen Adsorbens in das Regenerationsfluid sorbiert.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt einen Schnitt eines Ausführungsbeispiels eines Radialadsorbers;
Fig. 2 zeigt ein Rohrleitungs- und Instrumentenfließschema eines Ausführungsbeispiels eines Versuchsaufbaus zum Durchführen von Testzyklen;
Fig. 3 zeigt ein Ausführungsbeispiel eines Versuchsaufbaus zur Bestimmung der Druckfestigkeit;
Fig. 4 zeigt ein Ablaufdiagramm gemäß einem Ausführungsbeispiel des Herstellungsverfahrens;
Fig. 5A zeigt einen Schnitt eines Ausführungsbeispiels eines Zweischicht-Radialadsorbers; und
Fig. 5B zeigt einen Querschnitt des Zweischicht-Radialadsorbers der Fig. 5A.

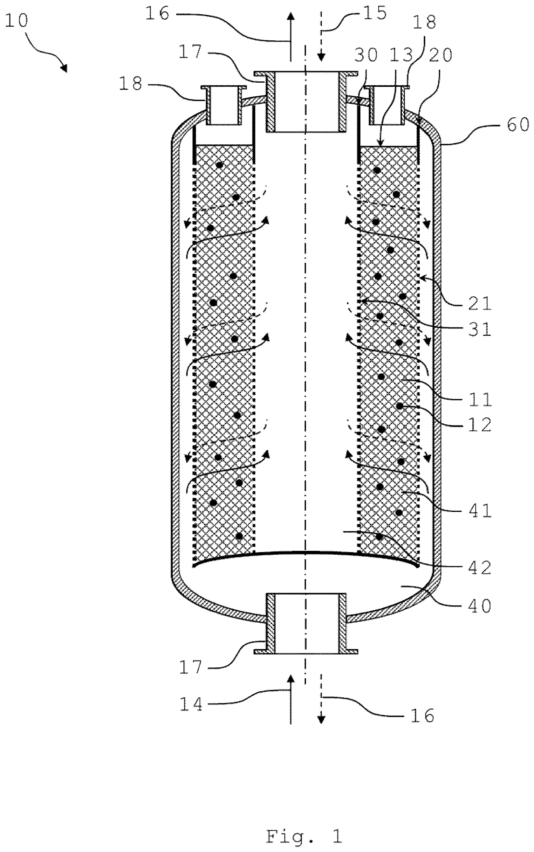

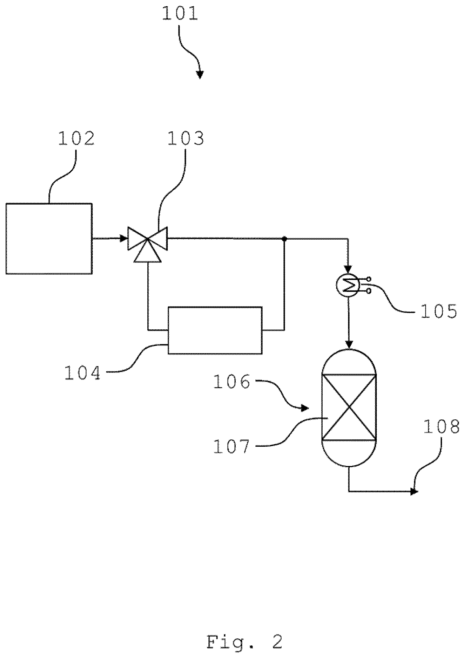

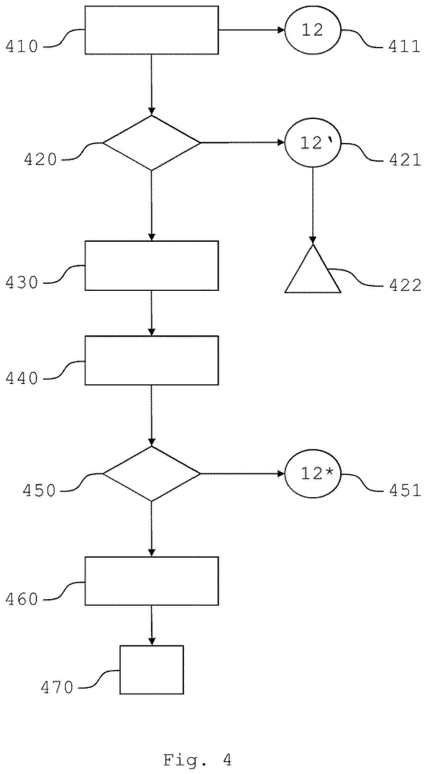

Fig. 1 zeigt ein Ausführungsbeispiel einer Adsorptionseinrichtung 10, welche gemäß dem Verfahren, wie es beispielsweise in der Fig. 4 dargestellt und in Bezug auf diese erläutert ist, hergestellt wurde. Insbesondere wurde das Adsorbens 11 aus einer Mehrzahl von Adsorbentien 11 mittels eines Testverfahrens ausgewählt, wobei beispielsweise ein Versuchsaufbau gemäß der Fig. 2 verwendet wurde.

Die Adsorptionseinrichtung 10 ist als ein Radialadsorber 10 ausgebildet. Der Radialadsorber 10 ist aus konzentrisch ineinander angeordneten zylinderförmigen Bauteilen 20, 30, 60 aufgebaut. Die Bauteile sind eine äußere Wandung 60, einen von der äußeren Wandung 60 umfassten äußeren Korb 20 und einen von dem äußeren Korb 20 umfassten inneren Korb 30. Der Raum zwischen dem inneren Korb 30 und dem äußeren Korb 20 wird als Adsorberbett 41 bezeichnet und dient zur Aufnahme einer Schüttung 13 des Adsorbens 11. Das Adsorbens wird dabei über Einfüllstutzen 18 von oben eingefüllt. Im Betrieb des Radialadsorbers sind die Einfüllstutzen verschlossen. Ferner weist der Radialadsorber jeweils oben und unten eine Öffnung 17 auf, durch welche im Betrieb Fluid strömen kann. Der Radialadsorber 10 weist beispielsweise eine Höhe im Bereich von 3 m bis 25 m und einen Durchmesser im Bereich von 2 m bis 8 m auf.

Beispielsweise wird beladenes Fluid 14 von unten in das äußere Volumen 40 zugeführt. Die Strömung des beladenen Fluids 14 ist dabei mit durchgezogenen Pfeilen kenntlich gemacht. Der äußere Korb 20 weist Durchströmöffnungen 21 auf. Das Fluid 14 tritt durch die Durchströmöffnungen 21 hindurch von dem Volumen 40 in das Adsorberbett 41 ein, durchströmt dieses und tritt über Durchströmöffnungen 31 in dem inneren Korb 30 in das innere Volumen 42 des Radialadsorbers 10 ein, von wo aus es als gereinigtes Fluid 16 über die obere Öffnung 17 abgeführt und beispielsweise in einem weiteren Prozess (nicht dargestellt) verarbeitet werden kann.

Das Adsorberbett 41 ist mit der Schüttung 13 des Adsorbens 11 befüllt. Das Adsorbens 11, dessen Auswahl anhand der Fig. 4 erläutert ist, besteht aus Partikeln 12, die hier von kugelförmiger Gestalt sind. In der Figur 1 ist die Schüttung 13 als eine karierte Fläche dargestellt, wobei beispielhaft eine Anzahl von Partikeln 12 verdeutlicht ist. Bevorzugt nehmen die Partikel 12 den zur Verfügung stehenden Platz beispielsweise gemäß einer dichten Kugelpackung ein. Die Partikel 12 sind hier größer als die Durchströmöffnungen 21 des äußeren Korbs 20 und größer als die Durchströmöffnungen 31 des inneren Korbs 30. Alternativ ist es möglich, dass die Durchströmöffnungen 21, 31 größer sind als die Partikel 12, wobei die Durchströmöffnungen 21, 31, dann beispielsweise mit einem Netz oder einem Textilfilter (nicht dargestellt) überdeckt sind, das eine Fluidströmung nur wenig einschränkt und gleichzeitig die Partikel 12 effektiv zurückhält.

Im Reinigungsmodus der Adsorptionseinrichtung 10 durchströmt das beladene Fluid 14 das Adsorbens 11, wobei es gereinigt, beispielsweise getrocknet wird. Es tritt anschließend durch die Durchströmöffnungen 31 des inneren Korbes 30 hindurch in den zentralen Hohlraum 42 des Radialadsorbers 10. Von diesem Hohlraum 42 führt eine mit der oberen Öffnung 17 verbundene Rohrleitung das gereinigte Fluid 16 weiter zu dem nächsten Prozessschritt (nicht dargestellt). Im Regenerationsmodus wird Regenerationsfluid 15 zugeführt, welches beispielsweise trockene Luft 15 bei einer erhöhten Temperatur, beispielsweise 150°C, sein kann. In dem Beispiel der Fig. 1 wird dabei die Strömungsrichtung umgekehrt, das heißt das Regenrationsfluid 15 wird durch die obere Öffnung 17 dem inneren Volumen 42 zugeführt. Die Strömung des Regenerationsfluids ist dabei mit gestrichelten Pfeilen verdeutlicht. Beim Durchströmen der Schüttung 13 des Adsorbens 11 nimmt die trockene Luft 15 Wasser aus dem Adsorbens 11 auf, wodurch dieses regeneriert wird. Sowohl durch das Beladen des Adsorbens 11 mit Feuchtigkeit als auch durch das nachfolgende Trocknen des Adsorbens 11 bei erhöhter Temperatur kommt es zu mechanischen Belastungen der Partikel 12 des Adsorbens 11. Diese können unter dieser Belastung zerbrechen. Wenn die Bruchstücke eines zerbrochenen Partikels kleiner als die Durchströmöffnungen 21, 31 in dem Innen- und/oder Außenkorb sind, können sie durch diese aus der Schüttung 13 ausgetragen werden. Indem das Adsorbens 11 aus einer Mehrzahl von Adsorbentien 11 mittels des anhand von Fig. 4 beschriebenen Verfahrens ausgewählt wird, kann dieser Effekt minimiert werden. Eine derartige Adsorptionseinrichtung 10 weist daher Vorteile gegenüber Adsorptionseinrichtungen auf, die nicht nach dem beschriebenen Verfahren hergestellt wurden, da die Partikel 12 des Adsorbens 11, welches für die Schüttung 13 verwendet wird, überlegene Alterungseigenschaften, insbesondere eine besonders vorteilhafte Brucheigenschaft, aufweisen.

Abweichend von der Darstellung in der Fig. 1 sind andere Strömungsvarianten, beispielsweise gleiche Strömungsrichtungen im Reinigungs- und im Regenerationsmodus, ebenfalls möglich.

Die EP 0 402 783 A1 beschreibt weitere Möglichkeiten, wie ein Radialadsorber strukturell aufgebaut sein kann.

Fig. 2 zeigt ein Rohrleitungs- und Instrumentenfließschema eines Ausführungsbeispiels eines Versuchsaufbaus 101 zum Durchführen von Testzyklen 420, 450 (siehe Fig. 4) zum Testen eines Adsorbens 11. Mit dem in der Fig. 2 dargestellten Versuchsaufbau 101 lässt sich insbesondere ein Adsorbens 11 aus einer Mehrzahl von Adsorbentien 11 auswählen, welches für die Herstellung einer Adsorptionseinrichtung 10, insbesondere dem Radialadsorber 10 gemäß der Fig. 1, optimal geeignet ist.

Die verfahrenstechnische Anlage 101 weist einen Lufttrockner 102 auf, welcher dazu eingerichtet ist, einen trockenen Luftstrom bereitzustellen. Der trockene Luftstrom kann über ein Dreiwegeventil 103 entweder zunächst einem Luftbefeuchter 104 oder direkt einem Teströhrchen 106 zugeführt werden. Der Luftbefeuchter 104 ist dazu eingerichtet, einen mit Feuchtigkeit gesättigten Luftstrom bereitzustellen. Dem Teströhrchen 106 vorgeschaltet ist ein elektrischer Lufterhitzer 105, beispielweise eine Heizwendel 105. Das Teströhrchen 106 ist zur Aufnahme einer Schüttung 107 des Adsorbens 11 eingerichtet, welches dem Test unterzogen wird. Nach dem Durchströmen des Teströhrchens 106 kann der Luftstrom über einen Auslass 108 abgeführt werden. Um eine Mehrzahl an Adsorbentien zeitgleich einem Test zu unterziehen, kann beispielsweise vorgesehen sein, dass anstelle des einzelnen Teströhrchens 106 eine Mehrzahl an Teströhrchen 106 parallel zueinander geschaltet sind (nicht dargestellt). Ferner könnten dann auch Durchflusswächter (nicht gezeigt) vorgesehen sein, die sicherstellen, dass durch jedes der Teströhrchen 106 die gleiche Menge des Fluids strömt.

Ein Testzyklus ist beispielsweise wie folgt zusammengesetzt. Ausgangspunkt ist das trockene Adsorbens 11. Zur Vorbereitung wird eine Schüttung 107 des Adsorbens 11 in das Teströhrchen 106 eingewogen, beispielsweise 10g. Die Schüttung umfasst somit eine Vielzahl an einzelnen Partikeln 12 des Adsorbens 11. Anschließend wird mit Feuchtigkeit gesättigte Luft durch das Teströhrchen 106 geleitet. Hierzu erzeugt der Lufttrockner 102 beispielsweise einen Luftstrom mit einem Volumenstrom von 450 Norm-l/min. Dieser wird von dem Dreiwegeventil 103 dem Luftbefeuchter 104 zugeleitet, in welchem die trockene Luft in mit Feuchtigkeit gesättigte Luft überführt wird. Die Luft hat beispielsweise eine Temperatur von 40°C, wobei die Heizwendel 105 in dieser Phase ausgeschaltet bleibt. Dieser Luftstrom wird für insgesamt 30 min durch das Teströhrchen 106 geleitet. Insgesamt werden in diesem Zeitintervall 13500 Norm-I feuchte Luft durch das Teströhrchen 106 mit der Schüttung 107 des Adsorbens 11 geleitet. Damit ist sichergestellt, dass die Schüttung 107 des Adsorbens 11 vollständig mit Feuchtigkeit beladen ist. Anschließend wird das Dreiwegeventil 103 umgeschaltet, so dass die trockene Luft nun direkt dem Teströhrchen 106 zugeführt wird. Der Luftstrom wird dabei beispielsweise auf 200 Norm-l/min reduziert. Die Heizwendel 105 wird nun ebenfalls angesteuert, so dass die Luft, wenn sie das Teströhrchen 106 mit dem Adsorbens 11 durchströmt, beispielsweise eine Temperatur von 300°C aufweist. Zusätzlich ist es möglich, dass das Teströhrchen 106 von außen beheizt wird (nicht dargestellt). Beim Durchströmen des Adsorbens 11 nimmt die trockene, erhitzte Luft Feuchtigkeit aus dem Adsorbens 11 auf, wobei dieses getrocknet wird. Nach dem Durchströmen wird die Luft über den Auslass 108 abgelassen. Dieser Betriebsmodus wird beispielsweise für 23 min aufrechterhalten, so dass insgesamt 4600 Norm-I trockener Luft durch das Teströhrchen 106 strömen. Anschließend ist die Schüttung 107 des Adsorbens 11 trocken.

Dieser Testzyklus wird beispielsweise 50-mal durchgeführt. Mit jedem Zyklus altern die von der Schüttung 107 umfassten Partikel 12 des Adsorbens 11 ein bisschen. Nach dem Durchlaufen der 50 Testzyklen wird die Druckfestigkeit ϕ eines gealterten Partikels 12' aus der Schüttung 107 des Adsorbens 11 bestimmt.

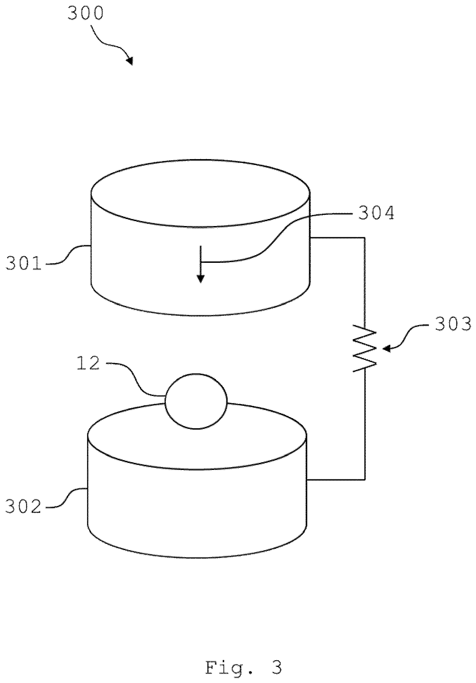

Fig. 3 zeigt ein Ausführungsbeispiel eines Versuchsaufbaus 300 zum Ermitteln der Druckfestigkeit eines Partikels 12, insbesondere um die Brucheigenschaft B gemäß dem Herstellungsverfahren (siehe Fig. 4) zu ermitteln.

Ein Partikel 12 wird dem Adsorbens 11 entnommen, wobei das Partikel 12 noch gar keinen Testzyklus durchlaufen hat. Das Partikel 12 wird auf die harte Oberfläche eines unteren Zylinders 302 eines Kraftmessers 300 gelegt. Ein oberer Zylinder 301 wird dann mit einer konstanten Geschwindigkeit 304, beispielsweise 10 mm/min, in Richtung des unteren Zylinders 302 gefahren. Ein Kraftsensor 303 misst dabei permanent die Kraft, die hierfür notwendig ist. Sobald die harte Oberfläche des oberen Zylinders 301 das Partikel 12 berührt, wird das Partikel 12 zwischen den beiden Zylindern 301, 302 eingeklemmt, wobei sich das Partikel 12 zu deformieren beginnt. Hierfür ist eine bestimmte Kraft notwendig, die vom Kraftsensor 303 gemessen wird. In Abhängigkeit von der mechanischen Stabilität des Partikels 12 zerbricht dieser bei einer maximalen Kraft. Diese maximale gemessene Kraft entspricht der Druckfestigkeit ϕ0 des Partikels 12.

Bevorzugt wird die Druckfestigkeit für eine größere Anzahl an Partikeln 12 gemessen, beispielsweise 20, 50 oder auch 100 der Partikel 12. Eine statistische Datenauswertung erlaubt es dann, eine genauere Aussage über ein mittleres Verhalten eines Ensembles von Partikeln 12 zu machen. Beispielsweise stellt eine Schüttung 13, 107 eines Adsorbens 11 ein solches Ensemble dar.

Ferner kann mit dem Versuchsaufbau 300 der Fig. 3 auch die Druckfestigkeit von Partikeln 12 nach einem Durchlaufen einer Anzahl von Testzyklen, beispielsweise in einem Aufbau 100 gemäß der Fig. 2, ermittelt werden.

Indem die Druckfestigkeit in verschiedenen Alterungszuständen ermittelt wird, lassen sich Aussagen über das Alterungsverhalten eines Adsorbens 11 treffen und so dessen Eignung für eine bestimmte Anwendung beurteilen.

Es folgen drei Tabellen, welche exemplarisch einige Versuchsergebnisse darstellen. Dabei wurden sieben Adsorbentien 11 einem Testverfahren, wie anhand der Fig. 2 beschrieben, unterzogen. Die Adsorbentien 11 sind in den Tabellen als Proben 1 - 7 bezeichnet. Tabelle 1 zeigt die Versuchsbedingungen während eines Zyklus.

**Tabelle 1: Versuchsbedingungen während eines Zyklus.**

| | |
|---|---|
| Beladungsdauer | 30 min |
| Regenerationsdauer | 23 min |
| Fluidgeschwindigkeit während Beladung | 0,76 m/s |
| Fluidgeschwindigkeit während Regeneration | 0,34 m/s |
| Temperatur der Heizwendel (Maximum) | 300°C |
| Temperatur des Adsorbens (Maximum) | 200°C |

Tabelle 2 zeigt die ermittelte spezifische Druckfestigkeit φ nach einer bestimmten Anzahl an durchlaufenen Testzyklen. Die Anzahl steht in der ersten Zeile jeder Spalte. Die getesteten Adsorbentien 11 waren dabei kugelförmige Teilchen. Die zweite Spalte der Tabelle 2 gibt den Ausgangswert der spezifischen Druckfestigkeit φ0 an. Hierbei wurden die Partikel 12 nach Anlieferung zunächst in einem Stickstoffstrom getrocknet. In Spalte drei ist die spezifische Druckfestigkeit φ75 nach einem Durchlaufen von 75 Testzyklen angegeben. Es ist ersichtlich, dass alle sieben Proben einen im Vergleich mit dem Ausgangswert kleineren Wert aufweisen. Dies entspricht der Erwartung, da die Partikel gealtert sind. Insbesondere Probe 1 und 2 weisen einen geringen absoluten Wert auf, der nur etwa 25% des Ausgangswerts beträgt. Diese Proben können gemäß dem Auswahlverfahren bereits jetzt ausgeschlossen werden. Spalte vier zeigt die ermittelte spezifische Druckfestigkeit φ500, nach dem Durchlaufen von 500 Testzyklen für die Proben 5 - 7. Im Vergleich zu φ75 gibt es keine großen Veränderungen. Die letzte Spalte gibt die ermittelte spezifische Druckfestigkeit φ1000 nach dem Durchlaufen von 1000 Testzyklen für die Proben 3 - 5 an. Probe 3 weist hier den höchsten Wert auf. Jedoch weisen insbesondere die Proben 4 und 5 im Vergleich zu φ75 einen fast stabilen Wert auf, was darauf hindeutet, dass diese Adsorbentien eine gute Langzeitstabilität aufweisen.

**Tabelle 2: Spezifische Druckfestigkeit φ in N/mm² der sieben Proben, ermittelt nach einer Anzahl von Testzyklen.**

| **Zyklen** | **0** | **75** | **500** | **1000** |
|---|---|---|---|---|
| Probe 1 | 9,2 | 2,2 | - | - |
| Probe 2 | 9,2 | 2,5 | - | - |
| Probe 3 | 12,6 | 10,5 | - | 6,0 |
| Probe 4 | 9,2 | 5,1 | - | 4,5 |
| Probe 5 | 8,0 | 5,1 | 4,6 | 4,7 |
| Probe 6 | 8,8 | 4,3 | 4,6 | - |
| Probe 7 | 8,8 | 5,4 | 4,8 | - |

Tabelle 3 schließlich zeigt eine reduzierte Druckfestigkeit für die gleichen sieben Proben. Die reduzierte Druckfestigkeit entspricht dem Verhältnis der Druckfestigkeit ϕN/ϕ0, wobei N der Anzahl der durchgeführten Testzyklen entspricht. Dieses Verhältnis ist für alle Proben am Anfang (0 Testzyklen) zunächst 1. Mit zunehmender Anzahl Testzyklen lässt sich eine Aussage über das Alterungsverhalten unabhängig von Absolutwerten treffen.

**Tabelle 3: Reduzierte Druckfestigkeit der sieben Proben, ermittelt nach einer Anzahl von Testzyklen.**

| **Zyklen** | **0** | **75** | **500** | **1000** |
|---|---|---|---|---|
| Probe 1 | 1 | 0,24 | - | - |
| Probe 2 | 1 | 0,28 | - | - |
| Probe 3 | 1 | 0,84 | - | 0,47 |
| Probe 4 | 1 | 0,56 | - | 0,49 |
| Probe 5 | 1 | 0,64 | 0,57 | 0,59 |
| Probe 6 | 1 | 0,49 | 0,53 | - |
| Probe 7 | 1 | 0,61 | 0,54 | - |

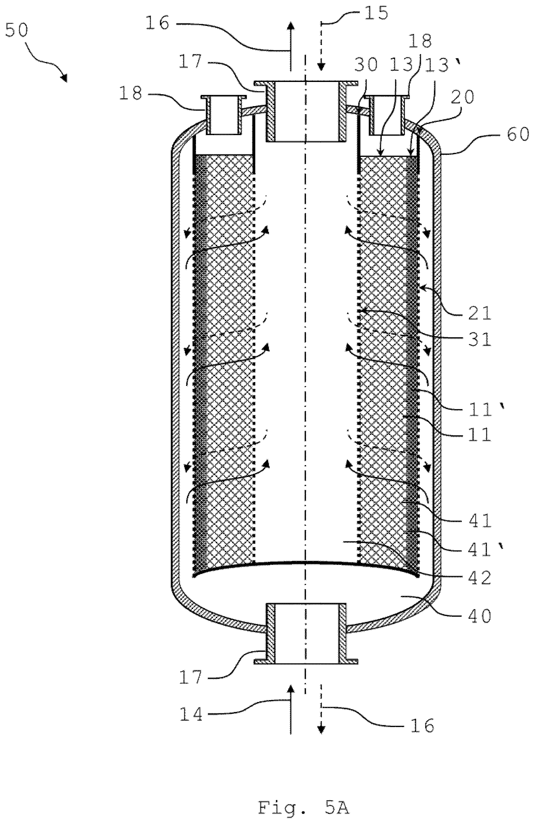

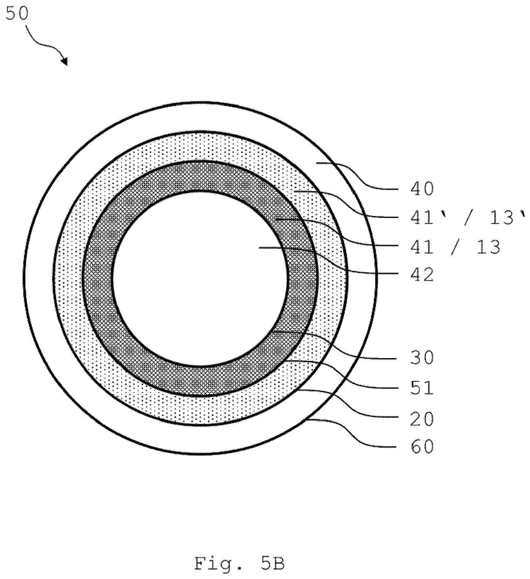

Fig. 4 zeigt ein Ablaufdiagramm eines Ausführungsbeispiels für ein Herstellungsverfahren für eine Adsorptionseinrichtung 10. Beispielsweise wurden der Radialadsorber 10 der Fig. 1 oder auch der Zweischicht-Radialadsorber 50 der Fig.5 gemäß diesem Verfahren hergestellt.

Dieses umfasst die Schritte: Bereitstellen 410 einer Auswahl verschiedener Adsorbentien 11. Beispielsweise sollen Adsorbentien 11 von unterschiedlichen Lieferanten verglichen werden. Dann werden zum Beispiel Proben von jeweils zwei verschiedenen Adsorbentien 11 jedes Lieferanten bestellt. Die gelieferten Proben werden beispielsweise in einem Trockenschrank getrocknet, so dass alle Proben in einem vergleichbaren Ausgangszustand sind.

Dann wird für jede Probe die Druckfestigkeit ϕ0 eines Partikels 12 ermittelt 411, beispielsweise mit einem Versuchsaufbau 300 der Fig.3.

Anschließend wird von jeder Probe eine Schüttung 107 einer Anzahl von 75 Testzyklen unterzogen 420. Die Testzyklen werden beispielsweise gemäß dem Versuchsaufbau 101 der Fig. 2 und dem dort beschriebenen Verfahren durchgeführt. Dadurch altern die in der Schüttung 107 enthaltenen Partikel 12.

Im Anschluss daran wird die Druckfestigkeit ϕ75 eines gealterten Partikels 12' jeder Probe ermittelt 421.

In einem ersten Auswahlschritt 430 wird die Brucheigenschaft B ermittelt, welche dem Verhältnis der Druckfestigkeit ϕ75 zu der Druckfestigkeit ϕ0 entspricht, ermittelt. Bereits jetzt lassen sich Adsorbentien, deren Brucheigenschaft B beispielsweise einen unteren Schwellwert unterschreitet, ausschließen, so dass das Testverfahren mit weniger Proben fortgeführt werden kann, was insbesondere den zeitlichen Aufwand gering halten kann.

Mit der Druckfestigkeit ϕ75 und dem maximalen Querschnitt A der gealterten Partikel 12' wird die spezifische Druckfestigkeit φ der gealterten Partikel 12' ermittelt 422.

In einem zweiten Auswahlschritt 440 wird die Brucheigenschaft B ermittelt, die der spezifischen Druckfestigkeit φ entspricht und diejenigen Proben ausgewählt, deren spezifische Druckfestigkeit φ über einem Schwellwert β liegt. Diejenigen Proben, die den Schwellwert unterschreiten, brauchen nicht weiter betrachtet zu werden.

Anschließend wird von den verbliebenen Proben eine weitere Schüttung 107 einer Anzahl von 500 Testzyklen unterzogen 450. Die Testzyklen werden wie zuvor durchgeführt. Dadurch altern die Partikel 12 der Schüttung 107 stark.

Im Anschluss daran wird die Druckfestigkeit ϕ500 eines stark gealterten Partikels 12* jeder Probe ermittelt 451.

Im letzten Auswahlschritt 460 wird die Brucheigenschaft B' ermittelt, die dem Verhältnis der Druckfestigkeit ϕ500 zu der Druckfestigkeit ϕ0 entspricht, und mit der Brucheigenschaft B verglichen. Es wird dasjenige Adsorbens 11 ausgewählt, dessen Brucheigenschaft B' im Vergleich zu der Brucheigenschaft B am wenigsten abgenommen hat. Dies kann auch so formuliert werden, dass dasjenige Adsorbens ausgewählt wird, dessen Druckfestigkeit ϕ500 im Verhältnis zu der Druckfestigkeit ϕ75 am wenigsten abgenommen hat.

Zuletzt wird ein Adsorberbett 41 einer vorgefertigten Adsorptionseinrichtung 10, beispielsweise mit einem Aufbau wie anhand der Fig. 1 beschrieben, mit einer Schüttung 13 des ausgewählten Adsorbens 11 befüllt. Damit ist das Herstellungsverfahren abgeschlossen und die Adsorptionseinrichtung 10 kann beispielsweise in einer verfahrenstechnischen Anlage zum Einsatz kommen.

Eine mit diesem Verfahren hergestellte Adsorptionseinrichtung 10 weist die vorteilhafte Eigenschaft auf, dass ein Wartungsintervall verlängert ist und damit Betriebskosten reduziert sind.

Fig. 5A zeigt ein weiteres Ausführungsbeispiel einer Adsorptionseinrichtung 50, die hier als ein Zweischicht-Radialadsorber 50 ausgebildet ist. Dieser wurde mit dem Verfahren, das anhand der Fig. 4 beschrieben wurde, hergestellt. Der Zweischicht-Radialadsorber 50 weist die gleichen Merkmale auf wie der Radialadsorber 10 der Fig. 1, wobei der Raum zwischen dem äußeren Korb 20 und dem inneren Korb 30 durch einen mittleren Korb 51 (siehe Fig. 5B) in zwei Adsorberbetten 41, 41' unterteilt ist. Die Adsorberbetten 41, 41' sind mit Schüttungen 13, 13' von unterschiedlichen Adsorbentien 11, 11' befüllt. Aus Gründen der Übersicht wurde auf eine Darstellung von einzelnen Partikeln der Adsorbentien 11, 11' in den Fig. 5A und 5B verzichtet. Dieser Aufbau bewirkt, dass ein Fluid 14, welches beispielsweise dem äußeren Volumen 40 zugeführt wird, sequenziell zuerst das Adsorberbett 41', welches mit einer Schüttung 13' des Adsorbens 11' befüllt ist, durchströmt, und anschließend das Adsorberbett 41, welches mit einer Schüttung 13 des Adsorbens 11 befüllt ist, durchströmt, bevor es in das innere Volumen 42 eintritt. Dies ermöglicht einen zweistufigen Reinigungsvorgang eines Fluids 14. Dabei können die beiden Reinigungsstufen zur Reinigung unterschiedlicher Verunreinigungen verwendet werden oder aber es können unterschiedliche Adsorbentien 11, 11' mit unterschiedlichen Eigenschaften bezüglich derselben Verunreinigung verwendet werden. Insbesondere wurden beide Adsorbentien 11, 11' aus einer Mehrzahl von Adsorbentien mittels eines Testverfahrens, wie es anhand der Fig. 2 - 4 beschrieben wurde, ausgewählt. Die Parameter, beispielsweise Schwellwerte für die Brucheigenschaft B, können dabei für die beiden Adsorbentien 11, 11' unterschiedlich sein. Der Zweischicht-Radialadsorber 50 lässt sich wie anhand des Radialadsorbers 10 der Fig. 1 erklärt ebenfalls regenerieren.

Fig. 5B zeigt einen Querschnitt des Zweischicht-Radialadsorbers 50 der Fig. 5A, der mit einem Verfahren wie Anhand der Fig. 4 beschrieben, hergestellt wurde. Der Zweischicht-Radialadsorber 50 weist die gleichen Merkmale auf wie der Radialadsorber 10 der Fig. 1, wobei zusätzlich ein mittlerer Korb 51 vorhanden ist. Der mittlere Korb 51 weist, wie auch der äußere Korb 20 und der innere Korb 30 Durchströmöffnungen zum Durchströmen mit Fluid auf (nicht dargestellt). Der mittlere Korb 51 teilt das Volumen 41 des Radialadsorbers 10 (siehe Fig. 1) in zwei Volumina 41, 41' auf. Die beiden Volumina 41, 41' können beispielsweise mit zwei unterschiedlichen Adsorbentien 11, 11' befüllt sein.

Die in den Fig. 1 und 5 dargestellten Adsorptionseinrichtungen 10, 50 weisen aufgrund des Herstellungsverfahrens, mit dem sie hergestellt wurden, den Vorteil auf, dass ein Wartungsintervall verlängert ist und damit Betriebskosten gesenkt sind. Ferner wird Material eingespart, wodurch ein nachhaltigerer Betrieb möglich ist. Außerdem kann ein negativer Einfluss, beispielsweise ein Beschädigen, von ausgetragenen Bruchstücken von Partikeln 12 eines Adsorbens 11 auf weitere verfahrenstechnische Vorrichtungen, die der Adsorptionseinrichtung 10, 50 nachgelagert sein können, reduziert. Dies trägt zu einem zuverlässigen Betrieb einer verfahrenstechnischen Anlage bei.

### Verwendete Bezugszeichen:

- 10: Adsorptionseinrichtung
- 11: Adsorbens
- 11': Adsorbens
- 12: Partikel
- 13: Schüttung
- 13': Schüttung
- 14: Fluid (beladen)
- 15: Regenerationsfluid
- 16: gereinigtes Fluid, Abgas
- 17: Öffnung
- 18: Einfüllstutzen
- 20: äußerer Korb
- 21: Durchströmöffnungen
- 30: innerer Korb
- 31: Durchströmöffnungen
- 40: Volumen
- 41: Adsorberbett
- 41': Adsorberbett
- 42: Volumen
- 50: Zweischicht-Radialadsorber
- 51: mittlerer Korb
- 60: äußere Wandung
- 101: Versuchsaufbau
- 102: Lufttrockner
- 103: Dreiwegventil
- 104: Luftbefeuchter
- 105: elektrischer Lufterhitzer
- 106: Teströhrchen
- 107: Schüttung des zu testenden Adsorbens
- 108: Abgas
- 300: Kraftmesser
- 301: oberer Zylinder
- 302: unterer Zylinder
- 303: Kraftsensor
- 304: Geschwindigkeit/Richtung
- 410: Bereitstellen
- 411: Bestimmen der Druckfestigkeit
- 420: Durchführen einer Anzahl an Testzyklen
- 421: Bestimmen der Druckfestigkeit
- 430: Auswählen
- 431: Bestimmen der Bruchfläche
- 440: Auswählen
- 450: Durchführen einer Anzahl an Testzyklen
- 451: Bestimmen der Druckfestigkeit
- 460: Auswählen
- 470: Befüllen

## Patentansprüche

1. Verfahren zur Herstellung einer Adsorptionseinrichtung (10), wobei ein Adsorberbett (41) der Adsorptionseinrichtung (10) mit einer Schüttung (13) eines Adsorbens (11) befüllt wird, welches aus einer Mehrzahl von Adsorbentien (11) mit einem Testverfahren ausgewählt wird, wobei bei dem Testverfahren ein Partikel (12) jedes Adsorbens (11) mehrfach mit einem Sorbat beladen und wieder regeneriert wird, wodurch das Partikel (12) ein gealtertes Partikel (12') wird, und eine Brucheigenschaft B des gealterten Partikels (12') jedes Adsorbens (11) ermittelt wird, wobei das Adsorbens (11) für die Schüttung (13) in Abhängigkeit von der ermittelten Brucheigenschaft B aus der Mehrzahl der Adsorbentien (11) ausgewählt wird.

2. Verfahren gemäß Anspruch 1, mit den Schritten:
Bereitstellen (410) der Mehrzahl von Adsorbentien (11), wobei jedes Adsorbens (11) eine Menge von Partikeln (12) umfasst;
Ermitteln (411) einer Druckfestigkeit ϕ0 des Partikels (12), wobei die Druckfestigkeit der auf das Partikel (12) ausgeübten Druckkraft entspricht, bei der das Partikel (12) zerbricht;
Durchführen (420) des Testverfahrens, wobei bei dem Testverfahren mit einem Partikel (12) jedes Adsorbens (11) eine vorgegebene Anzahl N1 Testzyklen (510) durchgeführt werden, wobei ein Testzyklus (510) ein Beladen (511) des Partikels (12) mit einem Sorbat mit Hilfe eines mit dem Sorbat beladenen Fluids (14) bei einer ersten Temperatur und anschließend ein Regenerieren (512) des beladenen Partikels (12) mit Hilfe eines weiteren Fluids (14) bei einer zweiten Temperatur umfasst, zum Erzeugen des gealterten Partikels (12');
Ermitteln (421) der Druckfestigkeit ϕN1 des gealterten Partikels (12') eines jeden Adsorbens (11);
Auswählen (430) des Adsorbens (11), bei dem die Druckfestigkeit ϕN1 gegenüber der Druckfestigkeit ϕ0 am wenigsten abgenommen hat, wobei die ermittelte Brucheigenschaft B dem Verhältnis der Druckfestigkeit ϕN1 zu der Druckfestigkeit ϕ0 entspricht; und
Befüllen (470) des Adsorberbetts (41) der Adsorptionseinrichtung (10) mit einer Schüttung (13) des ausgewählten Adsorbens (11).

3. Verfahren gemäß Anspruch 1 oder 2, ferner umfassend:
Durchführen (420) des Testverfahrens, wobei bei dem Testverfahren mit einem Partikel (12) jedes Adsorbens (11) eine vorgegebene Anzahl N1 Testzyklen (510) durchgeführt werden, zum Erzeugen des gealterten Partikels (12');
Ermitteln (421) der Druckfestigkeit ϕN1 des gealterten Partikels (12') eines jeden Adsorbens (11);
Ermitteln (431) einer maximalen Schnittfläche A des gealterten Partikels (12') eines Adsorbens (11);
Ermitteln einer spezifischen Druckfestigkeit φ, wobei φ = ϕN1/A; und
Auswählen (440) der Adsorbentien (11), deren spezifische Druckfestigkeit φ über einem vorgegebenen Schwellwert β liegt, φ ≥ β, wobei die ermittelte Brucheigenschaft B der spezifischen Druckfestigkeit φ entspricht.

4. Verfahren gemäß einem der Ansprüche 1 bis 3, ferner umfassend:
Durchführen (420) des Testverfahrens, wobei bei dem Testverfahren mit einem Partikel (12) jedes Adsorbens (11) eine vorgegebene Anzahl N1 Testzyklen (510) durchgeführt werden, zum Erzeugen des gealterten Partikels (12');
Ermitteln (421) der Druckfestigkeit ϕN1 des gealterten Partikels (12') eines jeden Adsorbens (11);
Durchführen (450) von einer vorgegebenen Anzahl N2 Testzyklen mit einem Partikel (12) eines jeden Adsorbens (11), mit N2 > N1, zum Erzeugen eines stark gealterten Partikels (12*);
Ermitteln (451) der Druckfestigkeit ϕN2 des stark gealterten Partikels (12*) eines jeden Adsorbens (11);
Auswählen (460) des Adsorbens (11), bei dem die Druckfestigkeit ϕN2 gegenüber der Druckfestigkeit ϕN1 am wenigsten abgenommen hat, wobei die ermittelte Brucheigenschaft B dem Verhältnis der Druckfestigkeit ϕN2 zu der Druckfestigkeit ϕN1 entspricht.

5. Verfahren gemäß einem der Ansprüche 2 bis 4, wobei die erste Temperatur geringer als die zweite Temperatur ist.

6. Verfahren gemäß einem der Ansprüche 2 bis 5, wobei die erste Temperatur zwischen 0°C und 100°C, bevorzugt zwischen 5°C und 50°C, weiter bevorzugt zwischen 15°C und 30°C liegt und die zweite Temperatur zwischen 100°C und 300°C, bevorzugt zwischen 150°C und 300°C, weiter bevorzugt zwischen 200°C und 250°C liegt.

7. Verfahren gemäß einem der Ansprüche 2 bis 6, wobei das Fluid (14) Luft ist und das Sorbat Wasser ist.

8. Verfahren gemäß einem der Ansprüche 1 bis 7, wobei die Partikel (12) der Adsorbentien (11) von kugelförmiger Gestalt sind und einen mittleren Radius von 0,1 - 25 mm aufweisen.

9. Verfahren gemäß einem der Ansprüche 1 bis 8, wobei die Adsorbentien (11) 13X-Zeolith-Molsiebmaterialien sind, welche eine Porenweite von 10±2 Å aufweisen.

10. Verfahren gemäß dem Anspruch 1, wobei das Verfahren ein Umrüstverfahren ist.

## Claims

1. Process for producing an adsorption unit (10), wherein an adsorber bed (41) of the adsorption unit (10) is filled with a bed (13) of an adsorbent (11) which is selected from a multitude of adsorbents (11) by a test method, wherein, in the test method, a particle (12) of each adsorbent (11) is repeatedly laden with a sorbate and regenerated again, which converts the particle (12) to an aged particle (12'), and a fracture property B of the aged particle (12') of each adsorbent (11) is determined, wherein the adsorbent (11) for the bed (13) is selected depending on the fracture property B determined from the multitude of adsorbents (11).

2. Process according to Claim 1, having the steps of:
providing (410) the multitude of adsorbents (11), wherein each adsorbent (11) comprises an amount of particles (12);
determining (411) a compressive strength ϕ0 of the particle (12), wherein the compressive strength corresponds to the compressive force exerted on the particle (12) at which the particle (12) breaks up;
conducting (420) the test method, wherein, in the test method, a particle (12) of each adsorbent (11) is used to conduct a defined number N1 of test cycles (510), wherein a test cycle (510) comprises loading (511) the particle (12) with a sorbate with the aid of a fluid (14) laden with the sorbate at a first temperature and then regenerating (512) the laden particle (12) with the aid of a further fluid (14) at a second temperature to generate the aged particle (12');
determining (421) the compressive strength ϕN1 of the aged particle (12') of each adsorbent (11);
selecting (430) the adsorbent (11) for which the compressive strength ϕN1 has decreased the least compared to the compressive strength ϕ0, wherein the fracture property B determined corresponds to the ratio of the compressive strength ϕN1 to the compressive strength ϕ0; and
filling (470) the adsorber bed (41) of the adsorption unit (10) with a bed (13) of the selected adsorbent (11).

3. Process according to Claim 1 or 2, further comprising:
conducting (420) the test method, wherein, in the test method, a particle (12) of each adsorbent (11) is used to conduct a defined number N1 of test cycles (510) to generate the aged particle (12');
determining (421) the compressive strength ϕN1 of the aged particle (12') of each adsorbent (11);
determining (431) a maximum cross-sectional area A of the aged particle (12') of an adsorbent (11);
determining a specific compressive strength φ, where φ = ϕN1/A; and
selecting (440) the adsorbents (11) having a specific compressive strength φ above a defined threshold β, φ ≥ β, where the fracture property B determined corresponds to the specific compressive strength φ.

4. Process according to any of Claims 1 to 3, further comprising:
conducting (420) the test method, wherein, in the test method, a particle (12) of each adsorbent (11) is used to conduct a defined number N1 of test cycles (510) to generate the aged particle (12');
determining (421) the compressive strength ϕN1 of the aged particle (12') of each adsorbent (11);
conducting (450) a defined number N2 of test cycles with a particle (12) of each adsorbent (11), with N2 > N1, to generate a highly aged particle (12*) ;
determining (451) the compressive strength ϕN2 of the highly aged particle (12*) of each adsorbent (11) ;
selecting (460) the adsorbent (11) for which the compressive strength ϕN2 has decreased the least compared to the compressive strength ϕN1, wherein the fracture property B determined corresponds to the ratio of the compressive strength ϕN2 to the compressive strength ϕN1.

5. Process according to any of Claims 2 to 4, wherein the first temperature is lower than the second temperature.

6. Process according to any of Claims 2 to 5, wherein the first temperature is between 0°C and 100°C, preferably between 5°C and 50°C, more preferably between 15°C and 30°C, and the second temperature is between 100°C and 300°C, preferably between 150°C and 300°C, more preferably between 200°C and 250°C.

7. Process according to any of Claims 2 to 6, wherein the fluid (14) is air and the sorbate is water.

8. Process according to any of Claims 1 to 7, wherein the particles (12) of the adsorbents (11) are spherical in shape and have a mean radius of 0.1-25 mm.

9. Process according to any of Claims 1 to 8, wherein the adsorbents (11) are 13X zeolite molecular sieve materials having a pore size of 10 ± 2 Å.

10. Process according to Claim 1, wherein the process is a retooling process.

## Revendications

1. Procédé, destiné à fabriquer un dispositif d'adsorption (10), lors duquel on remplit un lit d'adsorbant (41) du dispositif d'adsorption (10) d'un adsorbant (11) en vrac (13) que l'on choisit parmi une pluralité d'adsorbants (11) à l'aide d'un procédé d'essai, lors du procédé d'essai une particule (12) de chaque adsorbant (11) étant chargée plusieurs fois d'un sorbate et régénérée une nouvelle fois, suite à quoi, la particule (12) devient une particule (12') vieillie, et lors duquel on détermine une caractéristique à la rupture B de la particule (12') vieillie de chaque adsorbant (11), l'adsorbant (11) pour le produit en vrac (13) étant choisi en fonction de la caractéristique à la rupture B déterminée, parmi la pluralité des adsorbants (11).

2. Procédé selon la revendication 1, comprenant les étapes consistant à :
mettre à disposition (410) la pluralité d'adsorbants (11), chaque adsorbant (11) comprenant une quantité de particules (12) ;
déterminer (411) une résistance à la pression ϕ0 de la particule (12), la résistance à la pression correspondant à la force de compression exercée sur la particule (12) à laquelle la particule (12) se brise ;
réaliser (420) le procédé d'essai, lors du procédé d'essai, avec une particule (12) de chaque adsorbant (11) étant réalisé un nombre prédéfini N1 de cycles d'essai (510), un cycle d'essai (510) comprenant un chargement (511) de la particule (12) avec un sorbate à l'aide d'un fluide (14) chargé avec le sorbate à une première température, ensuite une régénération (512) de la particule (12) chargée à l'aide d'un autre fluide (14) à une deuxième température, pour créer la particule (12') vieillie ;
déterminer (421) la résistance à la pression ϕN1 de la particule (12') vieillie de chaque adsorbant (11) ;
choisir (430) l'adsorbant (11) pour lequel la résistance à la pression ϕN1 a le moins diminué par rapport à la résistance à la pression ϕ0, la caractéristique à la rupture B déterminée correspondant au rapport de la résistance à la pression ϕN1 à la résistance à la pression ϕ0 ; et
remplir (470) le lit d'adsorbant (41) du dispositif d'adsorption (10) avec un produit en vrac (13) de l'adsorbant (11) choisi.

3. Procédé selon la revendication 1 ou 2, comprenant les étapes consistant à :
réaliser (420) le procédé d'essai, lors du procédé d'essai, avec une particule (12) de chaque adsorbant (11) étant réalisé un nombre prédéfini N1 de cycles d'essai (510), pour créer la particule (12') vieillie ;
déterminer (421) la résistance à la pression ϕN1 de la particule (12') vieillie de chaque adsorbant (11) ;
déterminer (431) une surface de coupe A maximale de la particule (12') vieillie d'un adsorbant (11) ;
déterminer une résistance à la pression φ spécifique, sachant que ϕ = ϕN1/A ; et
choisir (440) l'adsorbant (11) dont la résistance à la pression φ spécifique est supérieure à une valeur seuil β prédéfinie, φ ≥ β, la caractéristique à la rupture B déterminée correspondant à la résistance à la pression φ spécifique.

4. Procédé selon l'une quelconque des revendications 1 à 3, comprenant par ailleurs les étapes consistant à :
réaliser (420) le procédé d'essai, lors du procédé d'essai, avec une particule (12) de chaque adsorbant (11) étant réalisé un nombre prédéfini N1 de cycles d'essai (510), pour créer la particule (12') vieillie ;
déterminer (421) la résistance à la pression ϕN1 de la particule (12') vieillie de chaque adsorbant (11) ;
réaliser (450) un nombre prédéfini N2 de cycles d'essai avec une particule (12) de chaque adsorbant (11), avec N2 > N1, pour créer une particule (12*) fortement vieillie ;
déterminer (451) la résistance à la pression ϕN2 de la particule (12*) fortement vieillie de chaque adsorbant (11) ;
choisir (460) l'adsorbant (11) pour lequel la résistance à la pression ϕN2 a le moins diminué par rapport à la résistance à la pression ϕN1, la caractéristique à la rupture B déterminée correspondant au rapport de la résistance à la pression ϕN2 à la résistance à la pression ϕN1.

5. Procédé selon l'une quelconque des revendications 2 à 4, la première température étant inférieure à la deuxième température.

6. Procédé selon l'une quelconque des revendications 2 à 5, la première température étant comprise entre 0 °C et 100 °C, de préférence entre 5 °C et 50 °C, de manière plus préférentielle, entre 15 °C et 30 °C et la deuxième température étant comprise entre 100 °C et 300 °C, de préférence entre 150 °C et 300 °C, de manière plus préférentielle, entre 200 °C et 250 °C.

7. Procédé selon l'une quelconque des revendications 2 à 6, le fluide (14) étant de l'air et le sorbate étant de l'eau.

8. Procédé selon l'une quelconque des revendications 1 à 7, les particules (12) des adsorbants (11) étant de forme sphérique et présentant un rayon moyen de 0,1 à 25 mm.

9. Procédé selon l'une quelconque des revendications 1 à 8, les adsorbants (11) étant des matières de tamis moléculaire de zéolithe 13X qui présentent un diamètre de pores 10±2 A.

10. Procédé selon la revendication 1, le procédé étant un procédé de rééquipement.
